# EUROPEAN PATENT APPLICATION

(11) **EP 3 477 014 A1**
(43) Date of publication of application: **01.05.2019**
(21) Application number: 17198135.0
(22) Date of filing: 24.10.2017
(51) Int. Cl.: E04F 15/00, C08G 18/12, C08G 18/48, C08G 18/76, B32B 27/40, C08G 18/30, C08L 75/08, C08G 101/00

(54) **PREPOLYMER MIXTURE FOR A PU FLOORING**

(71) Applicant: Polytex Sportbeläge Produktions-GmbH, 47929 Grefrath (DE)
(72) Inventor: FINDER, Zdenka, 86701 Rohrenfels-Ballerdorf (DE); SICK, Stephan, 47877 Willich-Neersen (DE); HALLY, Stefan, 41334 Nettetal (DE); MÜLLER, Wolfgang, 47929 Grefrath-Oedt (DE); LOHR, Ivo, 47906 Kempen (DE)
(74) Representative: Richardt Patentanwälte PartG mbB

(57) **Abstract**

The invention relates to a method for producing a 1C polyurethane system adapted for creating an elastic floor layer (129) at temperatures at or below 10°C. The method comprises creating (602) an initial mixture (900). The initial mixture comprises a mixture of MDI monomers, polymeric MDI and a polyol component. The MDI monomer mixture comprises 2,2' MDI, 2,4' MDI and 4,4' MDI, wherein at least 3.8% by weight of the initial mixture consist of the 2,2' MDI. The polyol component comprises EO-end-capped polypropylene glycol and a further polyol. The method further comprises reacting (604) the initial mixture into a prepolymer mixture comprising a prepolymer being the reaction product of the MDI monomers, the polymeric MDI and the polyol component.

## Description

### Field of the invention

The invention relates to a method for producing a 1C prepolymer mixture, in particular a prepolymer mixture for an elastic polyurethane flooring.

### Background and related art

Elastic floorings - for example, floorings for a sports ground, e.g., an athletic track, or a playground - are commonly made of polyurethane (PU).

They are typically installed by unrolling a prefabricated PU rolled mat at its destination and gluing the PU mat onto the floor with a polyurethane adhesive. The production of the PU mat within a manufacturing plant may include performing a chemical reaction that quickly, typically within minutes, generates a foamed, solid PU layer. The prefabricated PU roll is produced in a sports ground factory and is transported - potentially over long distances - to the sports area where it is to be installed. After the PU rolled mat is rolled out, the edges of the lanes need to be connected with each other and sealed to prevent the forming of open crevices between the lanes.

Meanwhile, some systems are available that allow generating and applying a PU binder directly at the use site ("in situ"), thereby reducing transport costs and easing the installation of the elastic PU-based flooring. For example, the PU binder can be foamed into PU foam at the use site mechanically or chemically.

However, at low temperatures (<10°C), the installation of elastic layers and running surfaces is almost impossible. Low temperatures significantly increase the viscosity of the PU binder. As a consequence, the binder loses many properties that are desired or necessary for in situ generation of elastic PU floorings: the PU binder loses its self-leveling properties and its ability to fill small depressions and cracks in the base layer. Moreover, if rubber granules are to be added to the PU binder, the viscid PU binder cannot be mixed homogeneously with the binder. This may result in the generation of uneven, easily detachable floorings with an inhomogeneous distribution of rubber granules and an inhomogeneous elasticity.

Moreover, low temperatures decrease the speed of the polymerization reaction that creates the PU. This may result in slow and/or incomplete hardening and an increased susceptibility of the applied PU binder to rain, moisture and other factors, which may reduce the quality of the elastic PU layer.

The in situ generation and application of a PU binder is particularly difficult when the weather is cold and wet, whereby these factors may depend from each other because cold weather may result in the generation of (morning) dew and slow down the evaporation of moisture. Moisture in the base layer may increase the reaction speed of the PU-generating reaction and result in an uncontrolled inhomogeneous foaming process. This foaming process may result in an uneven foam layer surface and an inhomogeneous distribution of PU material and rubber granules, if any.

As a consequence, in situ generation and installation of the PU binder cannot be performed during the cold season or in regions with cold weather all year round.

### Summary

The objective of the present invention is to provide an improved method for producing a 1C polyurethane system adapted for creating an elastic floor layer at temperatures at or below 10°C as specified in the independent claim. Embodiments of the invention are given in the dependent claims. Embodiments of the present invention can be freely combined with each other if they are not mutually exclusive.

In one aspect, the invention relates to a method for producing a 1C polyurethane system adapted for creating an elastic floor layer. The method comprises creating an initial mixture comprising a mixture of MDI (methylene diphenyl diisocyanate) monomers, polymeric MDI, and a polyol component.

The mixture of MDI monomers comprises 2,2' MDI, 2,4' MDI and 4,4' MDI, wherein at least 3.8% by weight of the initial mixture consists of the 2,2' MDI. The polyol component comprises EO-end-capped polypropylene glycol and a further polyol. The method further comprises reacting the initial mixture into a prepolymer mixture comprising a prepolymer. The prepolymer is the product of the reaction between the MDI monomers, the polymeric MDI, and the polyol component.

This may be advantageous, because the prepolymer mixture according to embodiments of the invention is adapted for creating an elastic floor layer at temperatures at or below 10°C. Thus, the prepolymer mixture can be used for generating an elastic PU based floor layer at "standard" weather conditions, e.g. at temperatures in the range of 10-25°C or higher, as well as under low temperature conditions. Thus, the 1C prepolymer mixture can be used also in seasons when the weather is cold, e.g. during the winter, or in geographic regions with a cold climate. Thus, embodiments of the invention allow the installing of elastic PU flooring layers at the use site also during the cold season or in regions with constant cold weather.

Typically, at low temperatures, the viscosity of 1C prepolymer mixtures is too high to allow the generation of in-situ foamed elastic PU layers. By including comparatively high amounts of 2,2'MDI in the initial mixture, the viscosity of the resulting prepolymer mixture is significantly reduced. As a consequence, the prepolymer mixture can be homogeneously mixed with rubber granules and other components of the elastic PU layer to be created, and is capable of self-leveling after being applied on the ground.

Mixing a comparatively high amount of 2,2' MDI and EO-end capped PPG has surprisingly has been observed to provide a 1C PU system that yields an elastic PU layer even at low temperatures. The observation is surprising because high amounts of 2,2' MDI are expected to be unsuited for use at low temperatures: 2,2' MDI is known to be much more inert than the 2,4' and 4,4' MDI. Thus, high 2,2' MDI monomer concentrations in the initial mixture and in the prepolymer mixture are known to reduce the speed of the PU generation, which is particularly undesirable in a low-temperature context where the problem of slow PU hardening is an issue. According to the Van't Hoff equation, decreasing the environmental temperature by 10°C will reduce the speed of a chemical reaction roughly by one half. However, it has surprisingly been observed that this negative effect of 2,2' MDI can be counteracted by the use of EO-end capped PPG.

EO-end capped PPG is highly hygroscopic, and the water attracted by the EO-end-capped PPG thus compensates for the retarding effect of the 2,2' MDI on the speed of the PU generation reaction. EO-end capped PPG have been observed to ensure a hardening process that is, on the one hand, slow enough to allow a thorough mixing of the prepolymer mixture with other substances, e.g., rubber granules, but is, on the other hand, fast enough to allow a complete hardening of the elastic PU layer within several hours, even at temperatures below 10°C.

Many tests with various combinations of catalysts have been performed to generate a 1C PU system having the desired PU polymerization and hardening kinetics (sufficient pot life to allow generation of a homogeneous prepolymer/granule mixture, with complete hardening of the PU layer within a day, preferably within several hours) at temperatures below 10°C, but all tests failed. This is because catalysts act in very small amounts, and generate local, partially hardened regions in a prepolymer/rubber mixture even during the mixing process. If the catalysts are chosen so that the pot life allows homogeneous mixing, the hardening time is too long, at least at low outside temperatures. If the catalysts are chosen so that the 1C PU system hardens quickly even at low outside temperatures, the pot life of the prepolymer/granule mixture is too short to allow for a homogeneous mixing of all components. Adding the specified amount of EO(ethylene-oxide)-end-capped PPG to a 1C PU system with high amounts of 2,2' MDI, however, allows the in situ generation of an elastic PU layer, e.g., for sports fields, even at cold temperatures. EO-end-capped PPG is highly hygroscopic. The attraction of water allows for a complete and fast hardening of the applied prepolymer mixture even at very low temperatures, because the attracted water reacts with the components of the prepolymer mixture to form a solid PU mass, e.g., a PU foam.

It has been observed that the use of EO-end-capped PPG in a 1C PU binder alone (without using an increased 2,2' MDI content) may be problematic, because the process of mixing the prepolymer mixture with additional components, e.g., rubber granules, typically requires several minutes or longer to ensure all components of the PU binder to be applied are homogeneously mixed. During the mixing process, moisture contained in the air and in the rubber granules (attracted by the highly hygroscopic EO-end capped PPG) may trigger the foaming reaction of the prepolymer mixture into PU. Thus, the use of highly EO-end-capped PPG alone may result in a premature hardening of the PU during the mixing process. However, the use of EO-end-capped PPG in combination with a high amount of 2,2' MDI monomer allows thorough mixing of the prepolymer with additional components, e.g., rubber granules, even at high air humidity and for more than 10 minutes, or even for more than 20 minutes, without a premature or inhomogeneous hardening or foaming of the prepolymer mixture.

Thus, the 1C prepolymer mixture, according to embodiments of the invention, may be adapted to homogeneously harden into an elastic PU layer that is suited for use as a flooring for a sports field or playground even at low temperatures. The resulting PU layer, according to embodiments, may have self-leveling capabilities for providing an even surface, may be able to penetrate small cracks and depressions in the ground, thereby firmly binding the elastic PU layer to the ground even in the absence of an additional adhesive layer, and may be homogeneously mixed with rubber granules and other components such as pigments, flame retardants, etc. On the one hand, the prepolymer mixture may allow for easy handling and installation of the elastic layer, because the prepolymer mixture does not prematurely harden while it is mixed with additional components. On the other hand, the prepolymer mixture will harden within a reasonable time, typically within several hours up to one day, also at temperatures below 10°C, or even below 5°C or lower.

In a further beneficial aspect, it has been observed that the reaction speed of the prepolymer mixture is robust (basically unaffected) by different moisture values of the subsoil due to dew or rain. Thus, contrary to some state-of-the-art 1C PU binders, the PU layer created from the prepolymer mixture, according to embodiments of the invention, does not vary, or varies less, with respect to important product properties such as elasticity, homogeneity, evenness, and strength, independent of moisture in the base layer.

According to embodiments, the monomeric MDI mixture of the initial mixture comprises the 2,2' monomeric MDI in the amount of 3.8%-10.8% by weight of the initial mixture, the 2,4' monomeric MDI in the amount of 15.0%-24.8% by weight of the initial mixture, and the 4,4' monomeric MDI in the amount of 13.2%-17.0% by weight of the initial mixture. For example, the monomeric MDI mixture comprises the 2,2' monomeric MDI in the amount of 5% by weight of the initial mixture, the 2,4' monomeric MDI in the amount of 18.3% by weight of the initial mixture, and the 4,4' monomeric MDI in the amount of 15% by weight of the initial mixture.

According to embodiments, the initial mixture comprises the polymeric MDI in the amount of 1.2%-2.4% by weight of the initial mixture.

According to embodiments, the initial mixture comprises the further polyol in an amount of 30% - 45% by weight of the initial mixture, e.g. 38% by weight of the initial mixture.

According to embodiments, the initial mixture comprises the EO-end capped PPG in the amount of 10% - 20% by weight of the initial mixture, e.g. 16% by weight of the initial mixture.

According to embodiments, the further polyol is polypropylene glycol (PPG), in particular PPG having an average molecular weight of about 2000 g/mol.

Polypropylene glycol can be produced by ring-opening polymerization of propylene oxide.

According to embodiments, the PPG used as the further polyol is manufactured by polymerizing propylene glycol and propylene oxide.

According to embodiments, the EO-end-capped PPG is manufactured by polymerizing propylene glycol, propylene oxide, and ethylene oxide. Preferably, the reaction mixture for this polymerization comprises about 13%-23%, preferably 18% by its weight the ethylene oxide.

According to embodiments, the further polyol has a viscosity of 250-450 mPa/s at 25°C.

According to embodiments, the further polyol has an average molecular weight of 1700-2300 g/mol.

According to embodiments, the further polyol has an OH-number of 50-60.

For example, the further polyol can have a viscosity of 350 mPa/s at 25°C, an average molecular weight of 2000 g/mol and an OH-number of 56.

For example, the further polyol can be polypropylene glycol (PPG), e.g. PPG having a viscosity of 350 mPa/s at 25°C, an average molecular weight of 2000 g/mol and an OH-number of 56. For example, PPG with the desired physico-chemical properties can be created by polymerizing a mixture of propylene glycol and propylene oxide.

According to embodiments, the EO-end capped PPG has a viscosity of 650-850 mPa/s at 25°C and/or an average molecular weight of 3700-4300 g/mol and/or an OH-number of 25-35. For example, the EO-end capped PPG has a viscosity of 780 mPa/s at 25°C, an average molecular weight of 4000 g/mol and an OH-number of 29.

According to embodiments, the initial mixture and/or the prepolymer mixture is free of a catalyst that triggers the transformation of the prepolymer into polyurethane. In particular, according to embodiments of the invention, the initial mixture and/or the prepolymer mixture is free of a morpholine catalyst (such as, e.g. a DMDEE(2,2'-diorpholinyldiethylether) that accelerates the reaction between water and prepolymer. In addition, or alternatively, the initial mixture and/or the prepolymer mixture is free of a dioctyltin mercaptide that starts the hardening reaction.

As mentioned above, empirical tests with various combinations of catalysts have been performed, but none of the generated test mixtures provided a 1C PU system having the desired PU polymerization and hardening kinetics. Embodiments of the invention allow providing a 1C PU system that is free of the abovementioned types of catalysts that are commonly used in 1C PU systems for initiating and boosting the foaming and hardening reactions. Using a 1C PU system that is free of such catalysts may be advantageous, as production costs are reduced and heavy-metal pollution is avoided from the beginning.

According to embodiments, the prepolymer mixture comprises the prepolymer in an amount of 88% - 90% by weight of the prepolymer mixture. In addition, or alternatively, the prepolymer mixture comprises the monomeric 2,2' MDI and 2,4' MDI combined in an amount of 10%-12% by weight of the prepolymer mixture.

According to embodiments, the initial mixture furthercomprises phosphoric acid. For example, the initial mixture comprises 0.001% - 0.005%, e.g. 0.002% phosphoric acid by weight of the initial mixture. The phosphoric acid preferably has a concentration of 85%. Using phosphoric acid may have the benefit of increasing the shelf life of the prepolymer mixture.

According to embodiments, the initial mixture further comprises oil, also referred to as "process oil." Preferably, naphthenic oils in the amount of 7%-15% by weight of the initial mixture are used.

According to embodiments, the initial mixture comprises:
- the 2,2' monomeric MDI in an amount of 3.8% - 10.8% by weight of the initial mixture;
- the 2,4' monomeric MDI in an amount of 15.0 - 24.8% by weight of the initial mixture;
- the 4,4' monomeric MDI in an amount of 13.2-17% by weight of the initial mixture;
- the MDI polymer in an amount of 1.2% - 2.4% by weight of the initial mixture;
- the further polyol, e.g. PPG, in an amount of 30% - 45% by weight of the initial mixture;
- the EO-end capped PPG in an amount of 10% - 20% by weight of the initial mixture;
- oil in an amount of 7%-15% by weight of the initial mixture; and
- phosphor acid in an amount of 0.001 % - 0.0005% by weight of the initial mixture.

In a further aspect, the invention relates to a method for creating an elastic floor layer, e.g., an outdoor floor layer for a sports field. The method comprises applying the prepolymer mixture created according to any one of the 1C PU system-generation methods described herein for embodiments of the invention, and letting the applied prepolymer mixture harden to form the elastic floor layer.

According to embodiments, the method for creating the elastic floor layer further comprises mixing rubber granules with the prepolymer mixture before the prepolymer mixture is applied on the ground. Optionally, the prepolymer mixture may, in addition, be mixed with additional components such as pigments, dispersing aids, fillers, flame retardants, and the like. Preferably, the mixing is performed for at least 5 minutes, preferably at least 10 minutes, still preferably for at least 15 minutes to ensure the homogeneous mixing of all components.

According to embodiments, the prepolymer mixture is applied on the ground at an environmental temperature lower than 10°C, in particular at a temperature lower than 5°C, in particular at a temperature lower than 0°C, e.g., in a range from 10°C to -5°C. It has been observed that the speed of the PU hardening reaction is fast enough to allow a complete hardening within a day or faster even at low temperatures, e.g., -5°C.

According to embodiments, the method further comprises actively or passively keeping the temperature of the prepolymer mixture at a temperature of 6°C-10°C while the prepolymer mixture is mixed with further components (rubber granules in particular) and/or until the prepolymer mixture is applied on the ground. For example, the prepolymer mixture and any further components can be heated with a dive plunger or in a drum with a heating sleeve and/or can be kept in the desired temperature range by transporting it in a thermally isolated container or drum.

According to embodiments, the elastic floor layer is an elastic subconstruction layer for athletic tracks and playgrounds. According to further embodiments, the elastic floor layer is an elastic base layer for athletic tracks and playgrounds. According to still further embodiments, the elastic floor layer is an in situ foamed elastic athletic track or playground surface.

In a further aspect, the invention relates to an elastic floor layer that is manufactured by a method according to any one of the embodiments described herein.

In a further aspect, the invention relates to a prepolymer mixture, also referred herein as "1C PU system" or "PU binder", manufactured by a method according to any one of the embodiments described herein.

According to embodiments, the prepolymer mixture has a viscosity lower than 12.000 mPAS at a temperature above 3.5°C. A 1C PU system having a viscosity lower than 12.000 mPAS has been observed to be particularly suitable for in situ generation of elastic PU layers, although also slightly higher values may be considered acceptable. However, state-of-the-art 1C PU systems have been observed to show an unacceptable viscosity at temperatures in the range of 3°C-10°C. Embodiments of the invention thus provide a 1C PU system with a desired viscosity also at temperatures below 10°C.

According to embodiments, the ground on which the prepolymer mixture is applied consists of concrete, soil, sand, wood, or a mixture thereof. In some embodiments, the prepolymer mixture with further components, if any, is applied directly to the ground, in the absence of an adhesive layer.

According to embodiments, the application of the prepolymer mixture to the ground comprises applying a first lane of the prepolymer mixture to the ground. Before the first lane has solidified into a PU mass, e.g., a PU foam, a second lane of the prepolymer mixture is applied to the ground so that a side edge of the second lane is in contact with a side edge of the first lane. This may ensure that the PU masses of the first and second lane intermix with each other and form an even, coherent surface without any additional working step of gluing the two lanes together.

The prepolymer mixture can be applied to the ground either by a vehicle or by a user-carried apparatus.

According to embodiments, the method further comprises applying, after the applied polyurethane foam has solidified or hardened, a sealing coating. The applied sealing coating preferentially covers multiple lanes of the polyurethane ground. The sealing coating is applied directly on top of the hardened PU layer without any intervening operation of gluing adjacent lanes to each other.

"Polyurethanes" (PU) as used herein are any type of polymer containing a urethane linkage. The urethane linkage (carbamate group) is -NH-CO-O. PUs are formed by reacting isocyanates with compounds that have an active hydrogen, such as diols, that contain hydroxyl-groups. Since there are many compounds containing active hydrogens and many different diisocyanates, the number of PUs that can be synthesized is very large. The specific properties of the PU can be tailored to a specific need by combining the appropriate compounds.

Polymers are macromolecules made of smaller, repeating units known as monomers. Generally, they consist of a primary long-chain backbone molecule with attached side groups.

A "1C PU system" as used herein is a reaction mixture that cures into polyurethane polymers, even in the absence of an extender (as required by 2C systems). In preferred embodiments, the moisture of the environmental air or soil or the moisture in the supplements (e.g., rubber granules) is sufficient for initializing and completing the reaction of transforming the prepolymer mixture into polyurethane.

An "apparatus" as used herein is a portable device that can be carried by a user and used to apply the foam generated in the reaction tank to the ground. Typically, the apparatus is used for in situ PU foam generation for smaller sports fields.

A "sport field," "pitch" or "sports ground" as used herein is an indoor or outdoor playing area for various sports, e.g., soccer, tennis, handball, sprint races and others.
A "foam" as used herein is a colloidal dispersion of a gas in a liquid or solid medium.

A "PU foam" as used herein is any liquid or hardened PU mass comprising gas bubbles or cells willed with gas. The CO2 gas generated during the hardening process result in the generation of a cellular structure of the PU matrix of the binder. When the PU binder has hardened, the cells will comprise the CO2 or environmental air. Preferably, the PU foam generated by the prepolymer mixture is a micro-foam as the mass of the binder in the rubber-granule-PU-binder mixture ("supplemented prepolymer mixture") may be too low to result in a significant foam generation and the bubbles may be very small.
When the prepolymer mixture is mixed with supplements, e.g., rubber granules, the components of the prepolymer mixture start reacting with the water contained in the air and/or in the supplements, thereby generating PU molecules and CO2. Thus, at the moment when the mixture of the prepolymer mixture and the supplements is applied on the ground, the supplemented prepolymer mixture is typically a viscous liquid with gas bubbles, i.e., a foam. The polymerization and foaming reactions continue in the applied foam until the PU generation has completed and the elastic PU layer has completely hardened. At least a small fraction of the liquid reaction mixture may have already been transformed into PU at the moment of applying the liquid PU foam on the ground, whereby the remaining fraction of the reaction mixture may not yet have been transformed into PU.

The "hydroxyl number" is the number of milligrams of potassium hydroxide required to neutralize the acetic acid taken up on the acetylation of one gram of a chemical substance that contains free hydroxyl groups. The hydroxyl value is a measure of the content of free hydroxyl groups in a chemical substance, usually expressed in units of the mass of potassium hydroxide (KOH) in milligrams equivalent to the hydroxyl content of one gram of the chemical substance.

### Brief description of the drawings

In the following, embodiments of the invention are explained in greater detail, by way of example only, making reference to the drawings in which:
- Figure 1: depicts the application of in situ generated PU foam on a sports field ground;
- Figure 2: depicts an athletic track comprising multiple lanes;
- Figure 3: depicts the automatic intermixing of adjacent PU foam lanes;
- Figure 4: depicts three fresh PU foam lanes;
- Figure 5: depicts a paving machine that applies PU foam on the ground;
- Figure 6: is a flowchart of a method of generating a prepolymer mixture that represents a 1C PU system adapted for generating an elastic PU layer at low temperatures;
- Figure 7: depicts a temperature-controlled container used as a test environment;
- Figure 8: depicts the viscosity of two 1C PU systems at various temperatures; and
- Figure 9: depicts the composition of an initial mixture for generating a 1C PU based binder.

### Detailed description

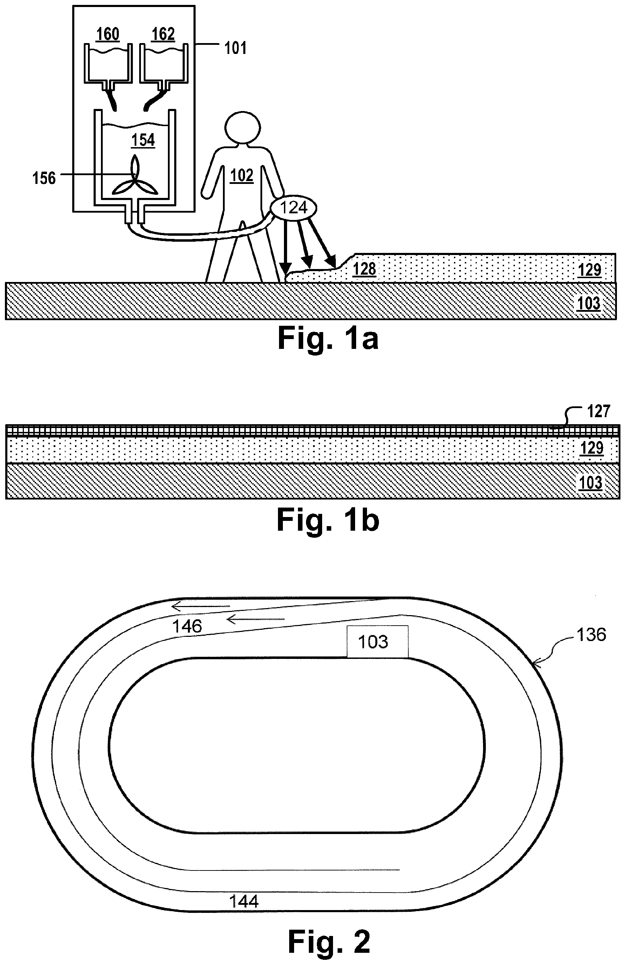

**Figure 1** depicts the application of in situ generated prepolymer mixture 128, also referred herein as "1C PU system," on a sports field ground 104. A user 102 carries a portable apparatus 101 comprising a reaction tank 154 with a mixer 156 that is coupled with a nozzle 124 via a duct. The prepolymer mixture 128, applied via the nozzle on the base layer 104, can be a prepolymer mixture or a "supplemented prepolymer mixture" comprising the prepolymer and additional optional components, e.g., rubber granules.

The system can comprise, for example, a single container holding the prepolymer mixture 128 or a supplemented prepolymer mixture.

According to another example, the system comprises a first container 160 with the prepolymer mixture and a second container 162 for rubber granules and/or other components to be mixed with the prepolymer mixture in the first container. The rubber granules may further increase the elasticity of the ground and may provide for a pleasant, natural haptic of the generated PU-based sports field.

Typically, the solidified elastic PU layer will have a thickness of about 1 to 5 cm.

The user 102 may wet the base layer 104 with water before applying the prepolymer mixture 129. However, this step is optional. In many cases, the humidity of the base layer or of the ambient air will be sufficient to allow the applied 1C PU mixture 154 to harden within several hours. When the prepolymer mixture comes into contact with water, e.g., during the mixing process with (moist) rubber granules and/or with moist air and/or after being applied on a moist base layer, CO2 and the PU polymer are continuously generated, yielding an elastic, foamed PU layer.

The viscosity of the 1C PU system ("prepolymer mixture") 128 is low enough to allow self-leveling of the viscous prepolymer mixture or PU foam 128 into a plane PU layer that slowly solidifies into an elastic PU-based flooring 129, e.g., of a sports field. Thus, uneven ground surfaces, damaged areas and hollows in the ground are filled by the PU layer that solidifies after some hours at low temperatures into an elastic flooring of the sports field. However, the viscosity is preferably still high enough to retain the CO2 bubbles to allow the PU foam to build. The PU foam is then allowed to dry and solidify completely. Depending on the temperature and other weather conditions, complete solidification is typically accomplished within 1 to 15 hours after the prepolymer mix was applied on the ground.
When the mixer has mixed the supplemented prepolymer mixture 128 homogeneously, the mixture starts generating PU polymers and CO2 gas bubbles. The chemical reactions for generating the PU foam may start immediately and may immediately generate some CO2 bubbles. The supplemented prepolymer mixture is transported from the mixer to a nozzle 124 and is applied directly on the ground of a sports field. The user 102 may apply multiple lanes of the PU reaction mixture to generate the PU flooring for a larger area. Preferentially, the PU reaction mixture is applied on the ground outdoors, but it is also possible to apply the method for generating indoor sports field floorings. In its solidified and dried state, the PU foam 129 is used as the PU flooring of the sports field.

Optionally, the solidified PU layer 129 can be coated with a protective and water-repellent layer 127 ("coating"), e.g., for increasing the resistance of the flooring to heat, UV light, rain, fungi and other factors, and/or to give the flooring a desired color. For example, the sealing coating may be a PU varnish.

Typically, the prepolymer mixture is applied to the ground within 30 minutes after its generation. The foam generation may start immediately after the prepolymer mixture is mixed with supplements. Hence, the supplemented prepolymer mixture may already comprise some CO2 bubbles when applied to the ground. Nevertheless, the prepolymer mixture can still be characterized as a (viscous) liquid. While the chemical reactions for generating the CO2 gas and the PU polymers continue, the liquid 1C PU system, having been applied on the ground, becomes more and more viscous, and is finally transformed into a solid PU mass, typically a PU foam, in particular microfoam, that constitutes the elastic floor layer. The in situ generated foam - at least right after its application on the floor - is sufficiently liquid to penetrate into small cracks in the ground, thereby mechanically fixing the PU floor when the PU has completely solidified. Thus, no additional leveling layer between the ground and the flooring layer is necessary to compensate for surface irregularities on the ground. Rather, the applied 1C PU system and the resulting PU foam will fill depressions and indentations in the ground and will equalize when a sufficient amount is applied to the ground.

Thus, embodiments of the invention may allow for the generation of huge, seamless sports floors that automatically compensate for surface irregularities in the ground, and firmly attach to the ground without any adhesive layer, even at temperatures below 10°C, below 5°C and below 0°C.

**Figure 2** schematically shows an athletic track comprising multiple lanes. In this embodiment, the sports field is an oval track field. The user with the apparatus 101 or with the vehicle 100 moves around the field applying the mixture 128 on the ground. The mixture may have already started to slowly generate CO2 bubbles and a viscous foam. The second lane 146 connects at the starting point of the first lane 144, whereby the apparatus or vehicle moves radially inwards so that the path of the apparatus 100 forms a spiral.

Independently from the geometry in which the reaction mixture is applied to the ground, the foam/mixture of the first lane 144 should be in a liquid state when the adjacent second lane is applied 146. If the foam 128 of the first and the second lanes 144, 146 are both liquid, not cured, the foam of both lanes 144, 146 will be mixed together in the contact zone and/or will firmly bond together to create an improved continuous PU flooring. Furthermore, the user 102 can use a leveling unit 126 on the vehicle or a mechanical tool to smooth the PU foam to produce an even and smooth surface 129. The mixture 128 for the second lane 146 is applied before the foam of the first lane 144 solidifies (is cured).

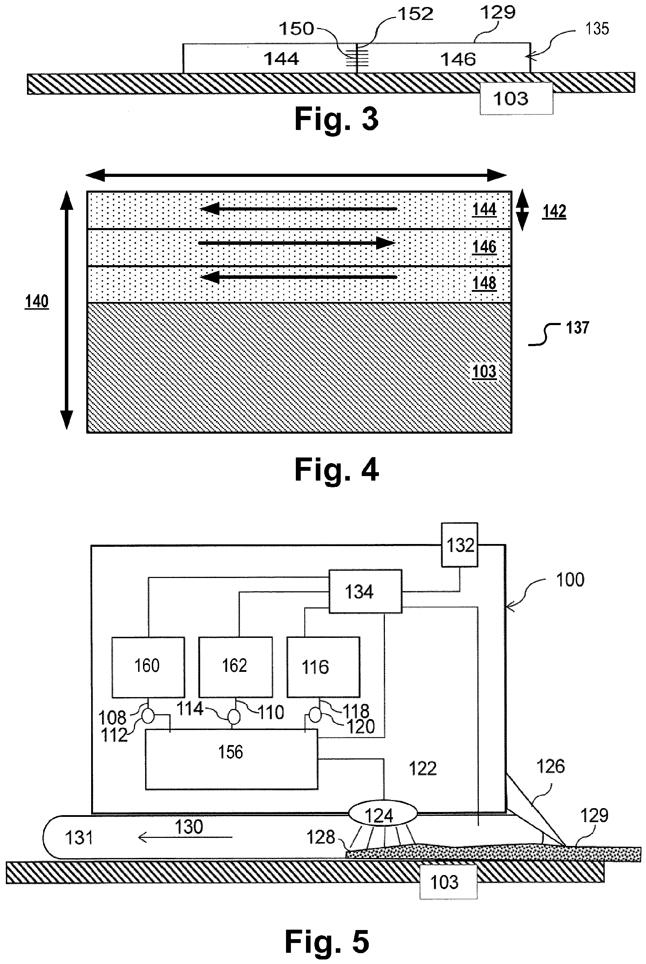

**Figure 4** shows one embodiment of a PU flooring of a sports field comprising multiple lanes, and **figure 3** depicts the automatic intermixing of adjacent PU foam lanes. The ground 103 to be covered with a polyurethane flooring can be a rectangular sports field 137 with a length 138 and a width 140. The ground 103 may be prepared, e.g., concreted and/or leveled, or unprepared. The user 102 may use a portable apparatus 101 as shown in Fig. 1 a or a vehicle 100 as shown in Fig. 5 for applying a lane of the liquid (optionally supplemented) prepolymer mixture 128 having a width 142 that is smaller than the width 140 of the sports ground 137.

Therefore, the mixture 128 is applied to the ground 103 in lanes 144, 146, 148, so that adjacent lanes 144, 146, 148 are in contact with each other. The liquid (supplemented) prepolymer mixture 128 of the second lane 146 immediately intermixes with and generates a coherent mass with the mixture 128 of the first lane 144 (see **figure 3**) so that a side edge 150 of the first lane 144 is in contact with the side edge 152 of the second lane 146. The side edge 135 would come into contact the side edge of lane 148 once said lane is applied on the ground.

In case a vehicle is used, the vehicle may be equipped with a leveling unit 126 and an injection unit 126. The leveling unit is wider in shape than the injection unit 124 so that the leveling unit 126 can smooth the transition from the first lane 144 to the second lane 146.

**Figure 5** depicts a system 100, e.g., a paving machine that applies a supplemented or nonsupplemented prepolymer mixture 128 on the ground, as depicted in Fig. 1. The mixture 128 starts to generate CO2 and to polymerize into PU upon being brought into contact with water, e.g., the moisture in the air or in the soil. The mixture 128 can comprise additives, e.g., emulsifiers and/or foam stabilizers, e.g., high sheer-resistant silicone foam stabilizers. Although the 1C system is designed for use in cold temperatures that slow down the reaction speed, the mixture 128 is preferably free of catalysts that are typically used to enhance the reactivity of 1C PU mixtures.

The system 100 comprises tanks 160, 162 for the components of the supplemented prepolymer mixture, wherein the first tank 160 contains the prepolymer mixture and the second tank 162 contains rubber granules and/or further components. Both tanks 160, 162 are connected with ducts 108, 110 to a mixing unit 156 in which the components are combined with a supplemented prepolymer mixture 128 for an elastic PU flooring. Each duct 108, 110 comprises a valve 112, 114 for dosing the amount of prepolymer mixture with rubber granules that flow from the respective tank 160, 162 to the mixing unit 156. The ducts 108, 110 may contain a supply unit, for example, a pump. In the example depicted in Fig. 5, the apparatus is a vehicle, but the portable apparatus depicted in Fig. 1 a could likewise contain the same or functionally equivalent components as described for the vehicle in Fig. 5.

Optionally, the system 100 can have an additional tank 116 containing water for wetting the base layer before the mixture 128 is applied. The additional tank 116 can be connected with a duct 118 to the mixing unit 156 or to the outside. The duct contains a valve 120. The system 100 may include various tanks for various additives, depending on the desired number of additives to be combined with the mixture 128 for the polyurethane flooring.

The mixing unit 156 provides the means for producing a supplemented prepolymer mixture for generating an elastic PU layer also at low environmental temperatures. The mixing unit 106 is connected with a duct 122 to an application unit 124 that is configured for applying the mixture 128 to a ground 103. The application unit 124 may contain various nozzles for applying the mixture 128 to the ground 103. The nozzles may be spaced out evenly over the entire width of the application unit 124. Alternatively, there may be a single nozzle or a bundle of nozzles, and the user may have to move the nozzle smoothly from one side to the other to spread the mixture 128 evenly over the ground (see Fig. 1 a).

Furthermore, the system 100 comprises a leveling unit 126 for leveling and smoothing the applied mixture 128. The leveling unit 126 may be a scraper, which is located in the drive direction 130 of the apparatus 100 behind the injection unit 124. The leveling unit 126 is configured for smoothing the surface of the applied mixture 128 and/or for taking up excess foam.

The vehicle comprises a driving unit 131 for driving the apparatus 100 in the drive direction 130.

Furthermore, a sensor 132 for measuring environmental conditions may be provided as part of the vehicle 100. The sensor 132 may be configured for measuring the air temperature, the ground temperature, the relative humidity or other climate conditions. Various sensors for determining various environmental data may be provided.

The valves 112, 114, 120, the mixing unit 156, the application unit 124, the leveling unit 126, the drive unit and the sensor 132 are connected to a control unit 134. The control unit 134 is configured for receiving environmental data measured by the sensor 132 and/or to control the valves 112, 114, 120, the mixing unit 106, the application unit 124, the drive unit 131 and the leveling unit 126, depending on the environmental data received. For example, the vehicle may stop applying the mixture when the measured environmental temperature is below -15°C and/or may take into account the geometry of the ground, the planned path, the respective length of each lane 144, 146, 148, the thickness of the polyurethane flooring and the speed of the system 100 (vehicle or portable apparatus) into the process of the determination of the mixture 128 in order to ensure that the foam of the first lane 144 is not cured before the foam of the second lane 146 is applied, and/or to ensure that a sufficient amount of PU foam is applied to reach the desired minimum thickness and elasticity of the PU flooring.

In the described embodiment, the sensor 132 is attached to the system 100 so that the environmental conditions are measured at the location of the apparatus 100. Therefore, the mixture and the process parameters can be adapted continuously to the current conditions so that a constant curing time of the PU mass generated from the applied mixture 128 can be achieved.

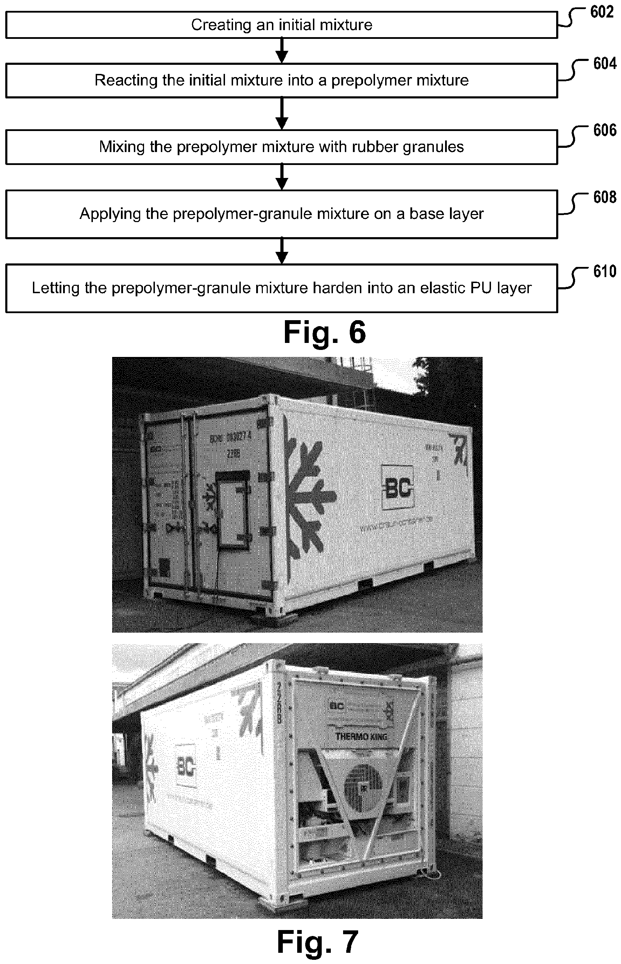

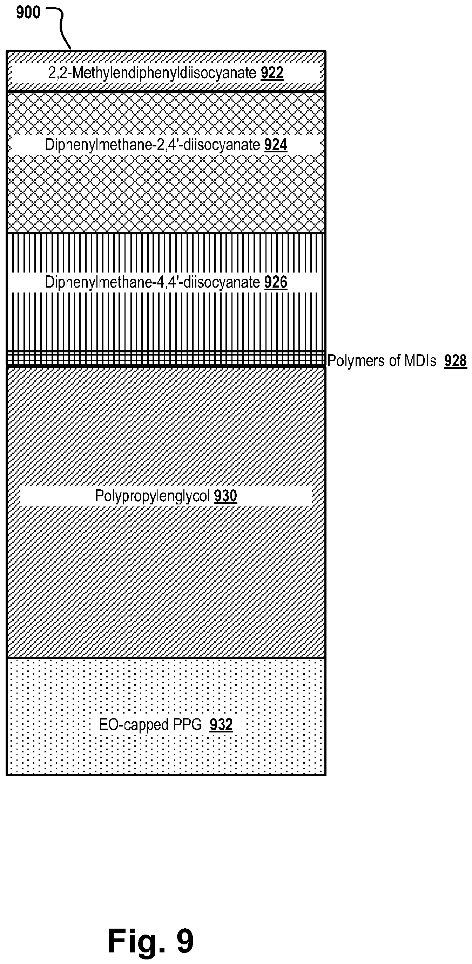

**Figure 6** is a flowchart of a method of creating a 1C PU system adapted for generating an elastic PU floor layer at temperatures below 10°C, e.g., at about 3°C. In the first step 602, an initial reaction mixture is generated, e.g., an initial mixture 900 depicted in figure 9. Then in step 604, the initial reaction mixture is transformed into a prepolymer mixture. Steps 602 and 604 are typically performed in a factory at temperatures higher than room temperature, e.g., 30°C-60°C. The resulting prepolymer mixture is then cooled to room temperature and stored until it is used.

In step 606, the prepolymer mixture generated in step 604 is mixed with additional substances, rubber granules in particular. The rubber granules can be, for example, SBR or EPDM rubber granules, or rubber granules made from recycled tires.

According to preferred embodiments, the EPDM has a comparatively low bulk density in the range of 550-650 g/l and a comparatively coarse granulation between 1- 4 mm (diameter of a rubber granule), whereby the fraction of rubber granules having a diameter of less than 2 mm is below 15% by weight. This may be advantageous as the mixing process at low temperatures is facilitated.

The mixing step 606 will bring the components of the prepolymer mixture in contact with the moisture in the air and/or in the additional substances, thereby triggering the generation of CO2 and PU foam. This step is typically performed at the use site and may take more than 10 minutes, e.g., more than 20 minutes to ensure the homogeneous mixing of all components. This step can be performed at environmental temperatures below 10°C, or below 5°C or even below 3°C. Preferably, the container used for the mixing step 606 comprises an isolation element ora heating element to ensure that during the mixing step 606 the temperature is not below 0°C, preferably not below 3°C.

Then the homogeneous mixture generated in step 606 is applied on the ground in step 608. The ground and the ambient air may have temperatures of below 5°C or even below 0°C; nevertheless, the PU polymerization reaction will continue. Thus, in step 610 the applied supplemented prepolymer mixture is allowed to harden. Depending on the temperature, this is typically achieved in less than 36 hours, or less than 18 hours, or even less than 12 hours, even in cases where the soil and air temperature is very low.

After applying the PU reaction mixture to the ground, the ground is optionally smoothed and leveled to a predetermined roughness and level. In preferred embodiments, the viscosity of the PU foam is small enough to allow self-leveling. Optionally, the solidified, cured PU layer is coated with an additional, protective layer 127. A separate step to anneal edges of two adjacent lanes to each other is not necessary.

**Figure 7** depicts the back side (top image) and front side (bottom image) of a temperature-controlled container that was used for empirically testing the suitability of various prepolymer mixtures for providing an elastic PU floor layer at temperatures below 10°C, below 5°C or even below 0°C.

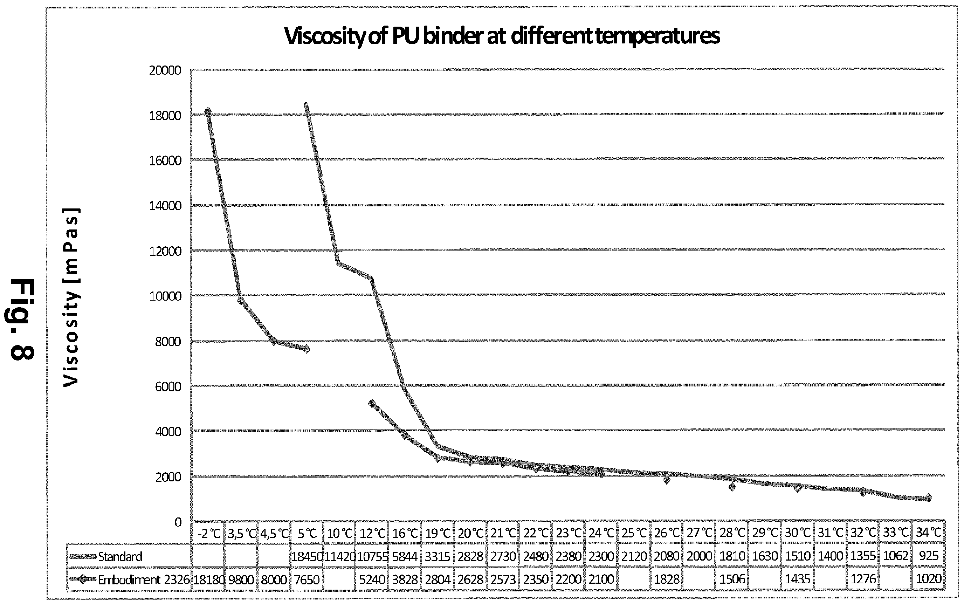

The viscosity of a PU binder varies as a function of the temperature. When the temperature drops, the viscosity of the binder increases. The binder becomes viscid and the mixing with rubber granules becomes more difficult. A standard PU binder referred herein as "Standard" was compared with a prepolymer mixture used as a PU binder "embodiment 2326" by measuring the viscosity of the PU binder at different temperatures in the temperature-controlled containers. The results of this test are shown in figure 8.

All binders and granules were stored and cooled down to 0°C in a cooling container for at least 24 hours. Subsequently, granules and binders were mixed and processed at 0°C. The resulting prepolymer mixtures ("PU binders") were applied on cool ground and cured at -5°C. For this purpose, the temperature in the containers was lowered for about 16 hours to -5 ° C.

The NCO content of the prepolymer of "embodiment 2326" was 9.5, and a CO content between 9.0 and 10 was observed in variations of the "embodiment 2326" that were also able to provide an elastic PU layer at low temperatures.

The NCO content of the "standard" prepolymer was between 9.5 and 10.5, e.g., 10.0.

It was observed that, contrary to the "standard" PU binder, the PU binder "embodiment 2326" could also be easily processed at low temperatures (<5°C).

**Figure 8** depicts the viscosity of two 1C PU systems at various environmental temperatures measured in the test setting described in the figure description of figure 7.

The "standard" PU binder can be processed easily at temperatures of 10°C and higher. At these temperatures, the standard PU binder has a viscosity of 12,000 mPas or lower. This allows for good processability in the mixing process. However, the viscosity of the standard binder significantly increases above 12,000 mPas at temperatures below 10°C.

The binder "embodiment 2326" has a significantly lower viscosity at low temperatures up to approx. 16°C compared with the standard PU binder. Correspondingly, this binder "embodiment 2326" should perform better than the standard at low temperatures, and - due to the almost identical viscosity at temperatures of approx. 20°C or more - should perform as well as the standard PU binder at higher temperatures.

It was observed that the binder "embodiment 2326" showed the same degree of miscibility of binder and rubber granules, processability, and hardening speed at temperatures of about 0°C-5°C as the standard PU binder at 16°C or higher. Depending on the moisture and the temperature, the binder "embodiment 2326" hardened without the additional application of water and without adding any catalysts at temperatures below 2°C within 38 hours, at temperatures between 2°C and 5°C within about 18 hours, and at temperatures between 6°C and 10°C within about 12 hours.

**Figure 9** illustrates the composition of an initial mixture 900 for generating a prepolymer mixture adapted for generating an elastic PU layer at low temperatures according to one embodiments of the invention.

The monomeric MDI mixture and the polymeric MDI are introduced into a reaction vessel and heated while being stirred to 40°C-60°C, preferably 30°C. Under stirring, the polyol components PPG and EO-capped PPG were added, and the mixture was stirred until a desired NCO content was approximately reached, which was to be expected according to the stoichiometry chosen. For example, a prepolymer mixture with an NCO content between 9.0 and 10.0 has been observed to provide a prepolymer mixture with desired properties. Thereafter, naphtalic oil and phosphoric acid as stabilizer was added to the generated prepolymer mixture. The whole stirring process can take about 1 hour, whereby the temperature is preferably increased from 45°C to 60°C. Then the generated prepolymer mixture is cooled to room temperature. About 24 hours later, the generation of the prepolymer mixture is completed.

According to embodiments, the resulting prepolymer mixture comprises about 10%-12% monomeric MDI and about 88-90% the prepolymer.

According to some embodiments, the initial mixture comprises about 7%-15% by weight oil, herein also referred to as "process oil", which is not an educt in the chemical reaction that generates the prepolymer. Thus, the resulting prepolymer mixture comprises about 7%-15% process oil, about 10%-12% monomeric MDI and about 73-83% the prepolymer. Adding process oil to the initial mixture may be advantageous, because it has been observed that oil reduces the viscosity of the prepolymer mixture, thereby easing the mixing of the prepolymer mixture with rubber granules and/or easing the even spreading of the prepolymer mixture over the ground.

According to embodiments, the prepolymer mixture generated by reacting the monomeric and polymeric MDI component and the polyol component of the initial mixture with each other comprises less than 1% by its weight the 4,4'MDI.

Polyurethane prepolymers are formed by combining an excess of diisocyanate monomers with a premix polyol. One of the NCO groups of the diisocyanate monomers reacts with one of the OH groups of the premix polyol. The other end of the polyol reacts with another diisocyanate. The resulting prepolymer has an isocyanate group on both ends. The prepolymer is a diisocyanate itself, and it reacts like a diisocyanate but with several important differences. When compared with the original diisocyanate, the prepolymer has a greater molecular weight, a higher viscosity, a lower isocyanate content by weight (%NCO), and a lower vapor pressure. Prepolymers can be made under controlled conditions in a manufacturing plant. A dry nitrogen atmosphere protects isocyanates from atmospheric moisture and protects polyols from oxidation.

The NCO groups of the MDI monomers and the polymeric MDI react with the OH groups of the polyol component in the initial mixture, changing the initial mixture into a prepolymer. Not all educts in the initial mixture react into the prepolymer, however; therefore, the prepolymer mixture comprises some remaining educts, in particular some monomeric MDI.

The viscosity of the prepolymer mixture strongly depends on the type of prepolymer generated and hence strongly depends on the composition of the initial mixture.

According to the depicted example, the following components were added to provide the initial mixture 900:
- 2,2' monomeric MDI 5.0% by weight of the initial mixture;
- 2,4' monomeric MDI 18.3% by weight of the initial mixture;
- 4,4' monomeric MDI 15% by weight of the initial mixture;
- polymeric MDI 1.6% by weight of the initial mixture;
- PPG 38% by weight of the initial mixture; (the PPG can have the following properties: average molecular weight = 2000 g/mol; OH- number=56; viscosity at 25°C=350 mPas; for example, the PPG can comprise terminal end-groups that are predominantly secondary hydroxyls and have a relatively low reactivity; the PPG can be acidified with a low level of phosphoric acid);
- EO-end-capped PPG: 16% by weight of the initial mixture; the EO-end-capped PPG has the following properties: OH number=29, average molecular weight = 4000 g/mol, viscosity = 780 mPas at 25 °C; said mixture is commercially available, e.g. as "Lupranol 2043", BASF
- oil 11,6% by weight of the initial mixture;
- 85% phosphoric acid 0,002% by weight of the initial mixture.

After adequate homogenization of the prepolymer mixture and rubber granulate, the installation onto the ground with the paver at temperatures below 10°C or lower is no problem.

The generated prepolymer mixture can be stored at room temperature for several months or longer. According to embodiments, the prepolymer mixture and/or the supplemented prepolymer mixture with the rubber granules is transported to the use site in a thermal insulated container that may in addition comprise a heating element in order to ensure that the temperature of the prepolymer mixture does not fall below 0 °C before it is applied on the ground, in particular when the environmental temperature is very low, e.g., -10°C.

### List of reference numerals

- 100: vehicle
- 101: portable apprentice
- 102: user
- 103: base layer
- 108: duct
- 110: duct
- 112: valve
- 114: valve
- 116: tank
- 118: duct
- 120: valve
- 122: duct
- 124: nozzle
- 126: leveling unit
- 128: applied prepolymer mixture (with or without rubber granules)
- 129: hardened elastic PU layer
- 130: drive direction
- 131: drive unit
- 132: sensor
- 134: control unit
- 135: side edge of lane
- 136: running track
- 137: sports field
- 142: width of a lane
- 144: lane
- 146: lane
- 148: lane
- 150: side edge of lane
- 152: side edge of lane
- 154: mixing container
- 156: stirrer
- 160: first container
- 162: second container
- 602-608: steps
- 900: initial mixture
- 922: 2,2' MDI monomer
- 924: 2,4' MDI monomer
- 926: 4,4' MDI monomer
- 928: polymeric MDI
- 930: PPG
- 932: EO-end-capped PPG

## Claims

1. A method for producing a 1C polyurethane system adapted for creating an elastic floor layer (129), the method comprising:
- creating (602) an initial mixture (900) comprising:
• a mixture of MDI monomers, the MDI monomers comprising 2,2' MDI, 2,4' MDI and 4,4' MDI, wherein at least 3.8% by weight of the initial mixture consist of the 2,2' MDI;
• polymeric MDI;
• a polyol component comprising:
• an EO-end-capped polypropylene glycol; and
• a further polyol;
- reacting (604) the initial mixture into a prepolymer mixture, the prepolymer mixture comprising a prepolymer being the reaction product of the MDI monomers, the polymeric MDI and the polyol component.

2. The method of claim 1, the initial mixture comprising:
- the 2,2' monomeric MDI in an amount of 3.8% - 10.8% by weight of the initial mixture;
- the 2,4' monomeric MDI in an amount of 15.0% - 24.8% by weight of the initial mixture; and
- the 4,4' monomeric MDI in an amount of 13.2% - 17.0% by weight of the initial mixture.

3. The method of any one of the previous claims, the initial mixture comprising:
- the polymeric MDI in an amount of 1.2% - 2.4% by weight of the initial mixture.

4. The method of any one of the previous claims, the initial mixture comprising:
- the polypropylene glycol in an amount of 38% - 54% by weight of the initial mixture.

5. The method of any one of the previous claims, the initial mixture comprising:
- the EO-end capped polypropylene glycol in an amount of 1.8% - 3.6% by weight of the initial mixture.

6. The method of any one of the previous claims, the further polyol having a viscosity of 250-450 mPa/s at 25°C and/or an average molecular weight of 1700-2300 g/mol and/or an OH-number of 50-60.

7. The method of any one of the previous claims, the further polyol being polypropylene glycol.

8. The method of any one of the previous claims, the EO-end-capped polypropylene glycol having a viscosity of 650-850 mPa/s at 25°C and/or an average molecular weight of 3700-4300 g/mol and/or an OH-number of 25-35.

9. The method of any one of the previous claims, the initial mixture and/or the prepolymer mixture being free of a catalyst that triggers the reaction of the prepolymer into polyurethane.

10. The method of any one of the previous claims the prepolymer mixture comprising:
- the prepolymer in an amount of 88% - 90% by weight of the prepolymer mixture; and/or
- the monomeric 2,2' MDI and 2,4' MDI combined in an amount of 10%-12%- by weight of the prepolymer mixture.

11. The method of any one of the previous claims, the 1C polyurethane system being adapted to harden at temperatures at or below 10°C.

12. The method of any one of the previous claims, the initial mixture comprising oil in an amount of 7%-15% by its weight

13. A method for creating an elastic floor layer (129), the method comprising:
- applying (608) the prepolymer mixture (128) created according to any one of claims 1-12 on a ground (103); and
- letting (610) the applied prepolymer mixture harden to form the elastic floor layer.

14. The method of claim 13, the method comprising:
- mixing (606) the prepolymer mixture with rubber granules before the prepolymer mixture is applied on the ground.

15. The method of any one of the previous claims 13-14, the prepolymer mixture being applied on the ground at an environmental temperature lower than 10°C, in particular at a temperature lower than 5°C, in particular at a temperature lower than 0°C, e.g. in a range from 10°C to -5°C.

16. The method of any one of the previous claims 13-14, further comprising actively or passively keeping the temperature of the prepolymer mixture at a temperature of 6°C - 10°C while the prepolymer mixture is mixed with further components and/or until the prepolymer mixture is applied on the ground.

17. The method of any one of claims 13-16, the elastic floor layer being selected from a group comprising:
- an elastic sub-construction layer for athletic tracks and playgrounds;
- an elastic base layer for athletic tracks and playgrounds;
- an in-situ foamed elastic athletic track or playground surface.

18. A prepolymer mixture manufactured by a method according to any one of claims 1-12.

19. An elastic floor layer manufactured by a method according to any one of claims 13-17.

## Amended claims

### Amended claims in accordance with Rule 137(2) EPC.

1. A method for producing a 1C polyurethane system adapted for creating an elastic floor layer (129), the method comprising:
- creating (602) an initial mixture (900) comprising:
• a mixture of MDI monomers, the MDI monomers comprising 2,2' MDI, 2,4' MDI and 4,4' MDI, wherein at least 3.8% by weight of the initial mixture consist of the 2,2' MDI;
• polymeric MDI;
• a polyol component comprising:
• an EO-end-capped polypropylene glycol; and
• a further polyol;
- reacting (604) the initial mixture into a prepolymer mixture, the prepolymer mixture comprising a prepolymer being the reaction product of the MDI monomers, the polymeric MDI and the polyol component.

2. The method of claim 1, the initial mixture comprising:
- the 2,2' monomeric MDI in an amount of 3.8% - 10.8% by weight of the initial mixture;
- the 2,4' monomeric MDI in an amount of 15.0% - 24.8% by weight of the initial mixture; and
- the 4,4' monomeric MDI in an amount of 13.2% - 17.0% by weight of the initial mixture.

3. The method of any one of the previous claims, the initial mixture comprising:
- the polymeric MDI in an amount of 1.2% - 2.4% by weight of the initial mixture.

4. The method of any one of the previous claims, the further polyol being polypropylene glycol and the initial mixture comprising:
- the polypropylene glycol in an amount of 30%-45% by weight of the initial mixture.

5. The method of any one of the previous claims, the initial mixture comprising:
- the EO-end capped polypropylene glycol in an amount of 10% - 20% by weight of the initial mixture.

6. The method of any one of the previous claims, the further polyol having a viscosity of 250-450 mPa/s at 25°C and/or an average molecular weight of 1700-2300 g/mol and/or an OH-number of 50-60.

7. The method of any one of the previous claims, the further polyol being polypropylene glycol.

8. The method of any one of the previous claims, the EO-end-capped polypropylene glycol having a viscosity of 650-850 mPa/s at 25°C and/or an average molecular weight of 3700-4300 g/mol and/or an OH-number of 25-35.

9. The method of any one of the previous claims, the initial mixture and/or the prepolymer mixture being free of a catalyst that triggers the reaction of the prepolymer into polyurethane.

10. The method of any one of the previous claims the prepolymer mixture comprising:
- the prepolymer in an amount of 88% - 90% by weight of the prepolymer mixture; and/or
- the monomeric 2,2' MDI and 2,4' MDI combined in an amount of 10%-12%- by weight of the prepolymer mixture.

11. The method of any one of the previous claims, the 1C polyurethane system being adapted to harden at temperatures at or below 10°C.

12. The method of any one of the previous claims, the initial mixture comprising oil in an amount of 7%-15% by its weight.

13. A method for creating an elastic floor layer (129), the method comprising:
- applying (608) the prepolymer mixture (128) created according to any one of claims 1-12 on a ground (103); and
- letting (610) the applied prepolymer mixture harden to form the elastic floor layer.

14. The method of claim 13, the method comprising:
- mixing (606) the prepolymer mixture with rubber granules before the prepolymer mixture is applied on the ground.

15. The method of any one of the previous claims 13-14, the prepolymer mixture being applied on the ground at an environmental temperature lower than 10°C, in particular at a temperature lower than 5°C, in particular at a temperature lower than 0°C, e.g. in a range from 10°C to -5°C.

16. The method of any one of the previous claims 13-14, further comprising actively or passively keeping the temperature of the prepolymer mixture at a temperature of 6°C - 10°C while the prepolymer mixture is mixed with further components and/or until the prepolymer mixture is applied on the ground.

17. The method of any one of claims 13-16, the elastic floor layer being selected from a group comprising:
- an elastic sub-construction layer for athletic tracks and playgrounds;
- an elastic base layer for athletic tracks and playgrounds;
- an in-situ foamed elastic athletic track or playground surface.

18. A prepolymer mixture manufactured by a method according to any one of claims 1-12.

19. An elastic floor layer manufactured by a method according to any one of claims 13-17.
